# EUROPEAN PATENT APPLICATION

(11) **EP 4 368 303 A1**
(43) Date of publication of application: **15.05.2024**
(21) Application number: 22878979.8
(22) Date of filing: 07.10.2022
(51) Int. Cl.: B08B 5/02, B08B 5/04, B08B 7/00, H01M 10/04

(54) **CLEANING DEVICE FOR SECONDARY BATTERY CARRIER**

(30) Priority: 08.10.2021 KR 20210133814
(71) Applicant: LG ENERGY SOLUTION, LTD., Seoul 07335 (KR)
(72) Inventor: KANG, Hyeonwoong, Daejeon 34122 (KR); PARK, Chun Hong, Daejeon 34122 (KR)
(74) Representative: Goddar, Heinz J.
(86) International application number: PCT/KR2022/015210
(87) International publication number: WO 2023/059158

(57) **Abstract**

A cleaning apparatus of a carrier for a secondary battery that cleans the carrier transported by a transfer part according to an embodiment of the present invention includes: a main body that includes an entrance through which the transfer part enters and an exit through which the transfer part exits; and a plurality of nozzles installed at the main body to spray a cleaning material cleaning the carrier at the carrier. The plurality of nozzles include: a plurality of first nozzles disposed with their respective centers staggered with respect to an imaginary straight line along a direction from the entrance to the exit; and at least one second nozzle spraying a different cleaning material from a cleaning material sprayed from the plurality of first nozzles.

## Description

### [Technical Field]

### Cross-reference to related application(s)

This application claims priority to and the benefit of Korean Patent Application No. 10-2021-0133814 filed in the Korean Intellectual Property Office on October 8, 2021, the entire contents of which are incorporated herein by reference.

The present invention relates to a cleaning apparatus, and more particularly, to an apparatus for cleaning a carrier used in an assembly line of a secondary battery.

### [Background Art]

In general, a secondary battery (or a rechargeable battery) has a configuration in which an electrode assembly including a positive electrode, a negative electrode, and a separator interposed between the positive electrode and the negative electrode is accommodated in a case that is a can or a pouch.

When the secondary battery is assembled, the electrode assembly or the case in which the electrode assembly is accommodated is transported to a required process line while being contained in a carrier.

In order to produce a high-quality secondary battery, impurities should not be introduced into a component of the electrode assembly or the case. Accordingly, it is essential to maintain a clean state of a carrier used when the secondary battery is assembled.

### [Disclosure]

### [Technical Problem]

An object to be solved by the present invention is to improve cleaning of a foreign material accumulated in a carrier used for assembling a secondary battery.

However, the problem to be solved by embodiments of the present invention is not limited to the above-described problem, and may be variously expanded in the range of the technical ideas included in the present invention.

### [Technical Solution]

A cleaning apparatus of a carrier for a secondary battery that cleans the carrier transported by a transfer part according to an embodiment of the present invention includes: a main body that includes an entrance through which the transfer part enters and an exit through which the transfer part exits; and a plurality of nozzles installed at the main body to spray a cleaning material cleaning the carrier at the carrier. The plurality of nozzles include: a plurality of first nozzles disposed with their respective centers staggered with respect to an imaginary straight line along a direction from the entrance to the exit; and at least one second nozzle spraying a different cleaning material from a cleaning material sprayed from the plurality of first nozzles.

The plurality of first nozzles may spray air, and the at least one second nozzle may spray dry ice.

The plurality of first nozzles and the at least one second nozzle may be spaced apart from each other at an upper portion of the main body.

The at least one second nozzle may be disposed at a center of the main body.

A suction part may be disposed adjacent to each of the plurality of first nozzles.

The suction part may be a truncated cone.

The at least one second nozzle may be detachably installed at the main body.

A third nozzle spraying air around at least one of the entrance and the exit may be installed at the main body.

The third nozzle may be obliquely installed at the main body to spray air toward the inside of the main body.

The secondary battery may be a cylindrical secondary battery.

### [Advantageous Effects]

A cleaning apparatus of a carrier for a secondary battery according to an embodiment may satisfactorily remove a foreign material adhering to the carrier and may prevent the foreign material from accumulating on the carrier.

Accordingly, when the secondary battery using the carrier according to the present invention is manufactured, inflow of the foreign material into a component of the secondary battery may be prevented in advance so that a high-quality secondary battery is manufactured.

Effects of the present invention are not limited to the foregoing effects, and other non-mentioned effects will be clearly understood by those skilled in the art from the description below.

### [Description of the Drawings]

FIG. 1 is a plan view of a cleaning apparatus of a carrier for a secondary battery according to an embodiment of the present invention.
FIG. 2 is a cross-sectional view taken along line II-II of FIG. 1.
FIG. 3 is a schematic view illustrating a positional relationship between a first nozzle and a suction part with respect to an imaginary straight line according to an embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

Parts that are irrelevant to the description are omitted in the drawings for clear description of the present invention, and like reference numerals designate like elements throughout the specification.

Further, the size and thickness of the elements shown in the drawings are arbitrarily illustrated for better understanding and ease of description, and the present invention is not necessarily limited thereto. In the drawings, the thicknesses of layers, films, panels, regions, etc., are exaggerated for clarity. In the drawings, for convenience of description, the thickness of layers, films, panels, areas, etc., are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

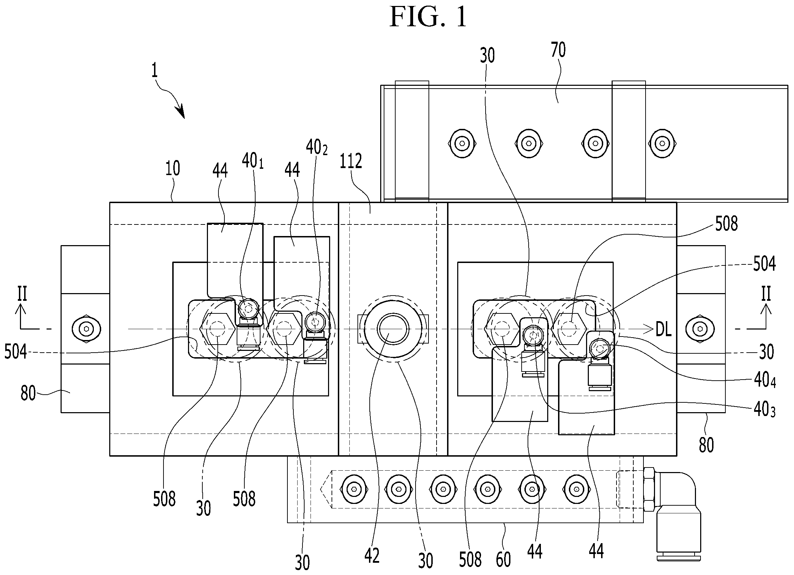

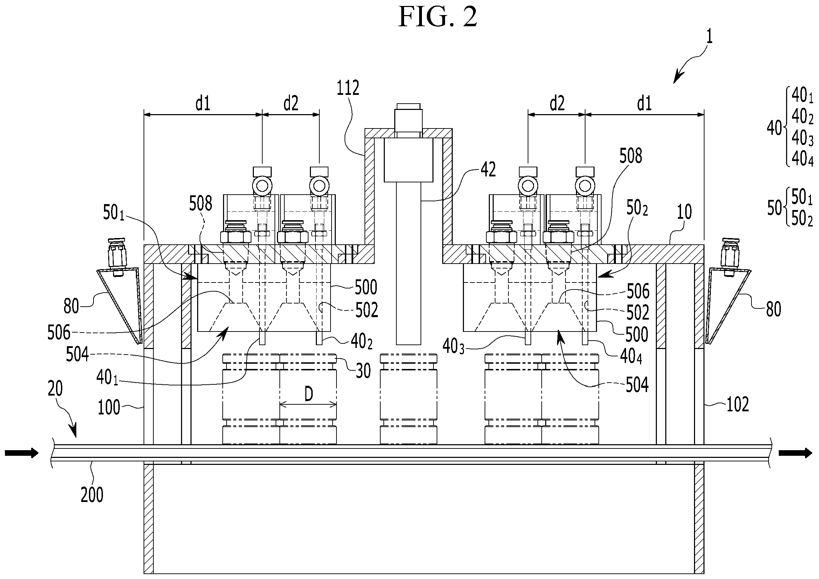

FIG. 1 is a plan view illustrating a cleaning apparatus of a carrier for a secondary battery (hereinafter referred to as the cleaning apparatus for convenience) according to an embodiment of the present invention, and FIG. 2 is a cross-sectional view taken along line II-II of FIG. 1.

As shown in FIGS. 1 and 2, the cleaning apparatus 1 according to the embodiment includes a main body 10 having an inner space. The main body 10 is provided in a substantially square box shape (or a substantially rectangular parallelepiped shape) and has an entrance (or an inlet) 100 and an exit (or an outlet) 102 provided at opposite sides (both left and right sides in the drawings). Due to this, the main body 10 may have a tunnel-type outer appearance.

The cleaning apparatus 1 according to the embodiment is configured to clean the carrier 30 transported by a transfer part 20 that enters the main body 10 through the entrance 100 and advances to the outside of the main body 10 through the exit 102.

In the present embodiment, the transfer part 20 may be formed of a conveyor belt 200, and the carrier 30 may be provided for a cylindrical secondary battery (or a cylindrical rechargeable battery). The conveyor belt 200 may be driven by a driving source (not shown) so that the conveyor belt is transported from the outside (left side based on the drawings) of the main body 10 to the outside (right side based on the drawings) of the main body 10 through the inside of the main body 10, and the carrier 30 may be made with a cylindrical shape with one or both sides open while having an internal space in accordance with an outer shape of an electrode assembly or a case of the cylindrical secondary battery. However, in the present invention, the transfer part 20 and the carrier 30 are not necessarily limited to these.

A foreign material generated due to self-wear of the carrier 30, friction between the carriers, or friction between the carrier and another component may be accumulated in the carrier. If the foreign material is continuously accumulated in the carrier 30, there is a high probability that the foreign material will flow into the electrode assembly or the case accommodated in the carrier 30 and will adversely affect the secondary battery to be manufactured. Thus, the carrier 30 needs to be kept as clean as possible.

To this end, a plurality of nozzles for cleaning the foreign material that may accumulate in the carrier 30 are installed in the main body 10. In the present embodiment, the plurality of nozzles are installed at distances at an upper surface of the main body 10 and are configured to spray a cleaning material from above the carrier 30 toward the carrier 30.

The plurality of nozzles include a plurality of first nozzles 40 that spray air and at least one second nozzle 42 that sprays dry ice. For example, in the present embodiment, four first nozzles 40 may be provided and one second nozzle 42 may be provided.

A first first nozzle 40₁ and a fourth first nozzle 40₄ among the four first nozzles 40 may be respectively installed at a predetermined distance d1 from the entrance 100 and the exit 102. The distance d1 may be set to sufficiently create an inner space of the main body 10 corresponding to a distance from the entrance 100 to the first first nozzle 40₁ and a distance from the exit 102 to the fourth first nozzle 40₄. For example, the distance d1 may be set so that the foreign material that may be made inside the main body 10 does not accumulate in the carrier 30.

In addition, a distance d2 between the first first nozzle 40₁ and a second first nozzle 40₂ among the four first nozzles 40, and a distance d2 between a third first nozzle 40s and the fourth first nozzle 40₄ among the four first nozzles 40, may be set equal to an outer diameter D of the carrier 30.

Each of the four first nozzles 40 is connected to a bracket 44, and is fixedly installed at an upper surface of the main body 10. In addition, the four first nozzles 40 are divided and connected to a plurality of suction parts 50 fixed at the upper surface of the main body 10. In the present embodiment, the first first nozzle 40₁ and the second first nozzle 40₂ are respectively inserted in a through hole 502 of a bracket 500 at which a pair of first suction parts 50₁ are formed so that spray holes of the first first nozzle 40₁ and the second first nozzle 40₂ are disposed to be positioned as close as possible around the carrier 30. In this case, a distance between the spray hole and the carrier 30 may be several mm. On the other hand, the third first nozzle 40s and the fourth first nozzle 40₄ are respectively inserted in the through hole 502 of the bracket 500 at which a pair of second suction parts 50₂ are formed so that spray holes of the third first nozzle 40s and the fourth first nozzle 40₄ are also disposed to be positioned as close as possible around the carrier 30. The four first nozzles 40₁, 40₂, 40₃, and 40₄ may be connected to a blowing manifold 60 disposed at one side of the main body 10 by a hose (not shown).

Each of the first suction part 50₁ and the second suction part 50₂ includes an inlet (or a suction port) 504 facing the carrier 30 and an outlet 506 disposed opposite to the suction port 504. Here, a center of the inlet 504 and a center of the outlet 506 may coincide. A shape of each of the first suction part 50₁ and the second suction part 50₂ may be formed in a shape of a truncated cone whose diameter decreases from the inlet 504 toward the outlet 506 to improve suction efficiency. The first suction part 50₁ and the second suction part 50₂ respectively correspond to adjacent first nozzles 40. The bracket 500 of the first suction part 50₁ or the bracket 500 of the second suction part 50₂ may be fixedly coupled to an upper surface of the main body 10 by screw coupling, and a connector 508 extending from the outlet 506 and exposed to the outside of the upper surface of the main body 10 may be connected to a suction manifold 70 disposed at one side of the main body 10 by a hose (not shown).

When the four first nozzles 40 are disposed at an upper surface of the main body 10, the four first nozzles 40 are disposed with their respective centers staggered with respect to an imaginary straight line DL (e.g., the imaginary straight line DL (see FIG. 1) passing through a center of the entrance 100 and a center of the exit 102) along a direction from the entrance 100 to the exit 102 of the main body 10 or an opposite direction thereof.

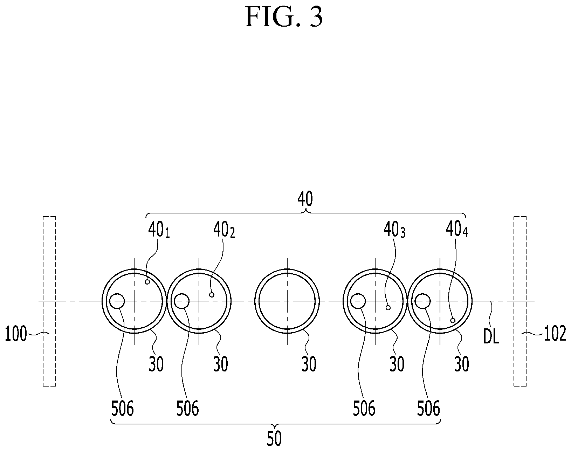

FIG. 3 is a schematic view illustrating a positional relationship between the first nozzle 40 and the suction part 50 with respect to the imaginary straight line DL. Here, the suction part 50 is shown based on the outlet 506.

As shown in FIG. 3, the imaginary straight line DL may be set to pass through the center of the entrance 100 and the center of the exit 102 of the main body 10 and to further pass through a center of the carrier 30. With respect to the straight line DL, the four first nozzles 40₁, 40₂, 40₃, and 40₄ are disposed with their centers staggered. For example, a line connecting the four first nozzles 40₁, 40₂, 40₃, and 40₄ may be disposed to be deviated from the straight line DL so that a shape of the line connecting the four first nozzles is approximately meandering. The four first nozzles may be respectively positioned at an upper side of the carrier 30 so as to spray (or inject) air toward circumference of the carrier 30 or toward the inside of the carrier 30.

On the other hand, the suction part 50 is disposed close to each of the four first nozzles 40₁, 40₂, 40₃, and 40₄ corresponding one-to-one, and sucks a foreign material separated from the carrier 30 by air sprayed from the four first nozzles 40₁, 40₂, 40₃, and 40₄. In this case, the suction part 50 may be positioned at an upper side of the carrier 30 so that the outlet 506 of the suction part 50 is positioned inside the carrier 30.

On the one hand, at a center of the main body 10 between the first suction part 50₁ and the second suction part 50₂, the second nozzle 42 spraying a cleaning material (that is, dry ice) different from a cleaning material of the first nozzle 40 is disposed

In the present embodiment, the second nozzle 42 may be connected to a dry ice supplier (not shown), and may be detachably coupled to an extension part 112 extending from an upper surface of the main body 10. For example, the second nozzle 42 may be coupled to the upper surface of the extension part 112 through screw coupling. In another embodiment, the second nozzle 42 may be fixed to the extension part 112, and the extension part 112 may be provided in a configuration in which the extension part 112 is detachably coupled to the upper surface of the main body 10.

On the one hand, a third nozzle 80 for spraying air may be installed at an outer side of the main body 10 around at least one of the entrance 100 and the exit 102 of the main body 10. In the present embodiment, the third nozzle 80 is installed around both the entrance 100 and the exit 102. In addition, the third nozzle 80 may be provided as a so-called air knife installed at an angle (approximately 5 degrees) with respect to the main body 10 so as to spray air toward the inside of the main body 10. The third nozzle 80 may also be connected to the blowing manifold 60 by a hose (not shown) to spray air into the main body 10 so that the third nozzle prevents a foreign material from scattering from the outside to the inside of the main body 10.

When the carrier 30 required for manufacturing a secondary battery is transferred along the conveyor belt 200 into the main body 10, the cleaning apparatus 1 configured as described above may separate and clean a foreign material accumulated in the carrier 30 by air sprayed from the first nozzle 40 and dry ice sprayed from the second nozzle 42.

In the cleaning apparatus 1 according to the present embodiment, the plurality of first nozzles 40 may spray air to various portions of the carrier 30 instead of one portion, and the second nozzle 42 may spray dry ice so that the carrier 30 is cleaned. Thus, it is possible to effectively clean a foreign material adhering to the carrier 30, and furthermore, it is possible to prevent the foreign material from accumulating in the carrier 30.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### <Description of symbols>

1: cleaning apparatus
10: main body
20: transfer part
30: carrier
40: first nozzle
42: second nozzle
50: suction part
100: entrance
102: exit

## Claims

1. A cleaning apparatus of a carrier for a secondary battery that cleans the carrier transported by a transfer part, comprising:
a main body that includes an entrance through which the transfer part enters and an exit through which the transfer part exits; and
a plurality of nozzles installed at the main body to spray a cleaning material cleaning the carrier at the carrier,
wherein the plurality of nozzles comprise:
a plurality of first nozzles disposed with their respective centers staggered with respect to an imaginary straight line along a direction from the entrance to the exit; and
at least one second nozzle spraying a cleaning material different from a cleaning material sprayed from the plurality of first nozzles.

2. The cleaning apparatus of claim 1, wherein the plurality of first nozzles spray air, and the at least one second nozzle sprays dry ice.

3. The cleaning apparatus of claim 1 or claim 2, wherein the plurality of first nozzles and the at least one second nozzle are spaced apart from each other at an upper portion of the main body.

4. The cleaning apparatus of claim 3, wherein the at least one second nozzle is disposed at a center of the main body.

5. The cleaning apparatus of claim 1, wherein a suction part is disposed adjacent to each of the plurality of first nozzles.

6. The cleaning apparatus of claim 5, wherein the suction part is a truncated cone.

7. The cleaning apparatus of claim 1, wherein the at least one second nozzle is detachably installed at the main body.

8. The cleaning apparatus of claim 1, wherein a third nozzle spraying air around at least one of the entrance and the exit is installed at the main body.

9. The cleaning apparatus of claim 8, wherein the third nozzle is obliquely installed at the main body to spray air toward the inside of the main body.

10. The cleaning apparatus of claim 1, wherein the secondary battery is a cylindrical secondary battery.
